Europäisches Patentamt

European Patent Office

Office européen des brevets

(11) Veröffentlichungsnummer: **0 094 438**
**B1**

(19)

(12) # EUROPÄISCHE PATENTSCHRIFT

(45) Veröffentlichungstag der Patentschrift:
18.12.85

(51) Int. Cl.⁴: **B 60 N 1/08**

(21) Anmeldenummer: 82104158.9

(22) Anmeldetag: 13.05.82

(54) Verriegelungsvorrichtung für die Längsverstelleinrichtung eines Fahrzeugsitzes.

(43) Veröffentlichungstag der Anmeldung:
23.11.83 Patentblatt 83/47

(45) Bekanntmachung des Hinweises auf die Patenterteilung:
18.12.85 Patentblatt 85/51

(84) Benannte Vertragsstaaten:
DE FR GB IT

(56) Entgegenhaltungen:
DE - A - 2 811 970

(73) Patentinhaber: Keiper Automobiltechnik GmbH. & Co.
KG, Postfach 14 03 80 Büchelstrasse 54-58,
D-5630 Remscheid 14 (DE)

(72) Erfinder: Thiel, Peter, Stockter Strasse 138,
D-5630 Remscheid (DE)

(74) Vertreter: Patentanwälte Phys. Bartels Dipl.-Ing. Fink
Dr.-Ing. Held, Lange Strasse 51, D-7000 Stuttgart 1 (DE)

# Beschreibung

Die Erfindung betrifft eine Verriegelungsvorrichtung für die Längsverstelleinrichtung eines Fahrzeugsitzes, mit mindestens einer Laufschiene, die sich in Richtung der Längsverstellung des Sitzes erstreckt, mit diesem verbunden und an einer am Fahrzeug befestigten Führungsschiene längsverschiebbar geführt ist, und mit einem Sperrglied, das an der Laufschiene für eine quer zur Längsrichtung derselben verlaufende Bewegung gelagert und mittels eines Betätigungsglieds zwischen einer Sperrstellung, in der das Sperrglied mit mindestens einer von an der Führungsschiene vorgesehenen Rasten verrastet ist, und einer Freigabestellung bewegbar ist, in der das Sperrglied aus der Verrastung ausgehoben ist.

Bei bekannten Verriegelungsvorrichtungen dieser Art sind die Rasten in einer seitlich neben der Führungsschiene angeordneten und mit dieser fest verbundenen Schiene ausgebildet, so dass nur eine einseitige Verriegelung vorhanden ist.

Der Erfindung liegt die Aufgabe zugrunde, eine Verriegelungsvorrichtung zu schaffen, die sich im Vergleich mit den bekannten Vorrichtungen der eingangs genannten Art durch eine sichere Verriegelungswirkung auszeichnet und dabei gleichzeitig auf besonders einfache Art und Weise auslösbar ist.

Bei einer Verriegelungsvorrichtung der eingangs genannten Art ist diese Aufgabe erfindungsgemäss durch die Merkmale des Patentanspruchs 1 gelöst. Dadurch, dass als Sperrglied ein zwischen zwei Rastenreihen angeordnetes Scharnier vorgesehen ist, ergibt sich bei Vorhandensein nur eines einzigen Sperrglieds eine Doppelverrastung und in erstrebter Weise somit eine besonders sichere Verriegelung. Trotz der beidseitig erfolgenden Verrastung ist diese jedoch in gewünschter Weise sehr einfach auslösbar, da durch einfaches Verschieben der Scharnierachse aufgrund der Anlage der Scharnierplatten an den Auflagern beide Platten aus der Spreizstellung gegeneinander geschwenkt werden, wobei die Verrastung der Plattenenden mit beiden Rastenreihen gelöst wird. Da das Scharnier durch Federkraft in seine Spreizstellung vorgespannt ist, genügt es, zur Auslösung der Vorrichtung ein einfaches bewegliches Glied vorzusehen, das gegen die Scharnierachse des in Spreizstellung befindlichen Scharniers bewegbar ist, um die Scharnierachse für das Überführen der Vorrichtung in die Freigabestellung zu verschieben. Beim Rückbewegen dieses beweglichen Glieds kehrt das Scharnier aufgrund der Vorspannkraft selbsttätig wieder in die Spreizstellung zurück, d. h. die Verriegelungsvorrichtung wird wieder in die Sperrstellung überführt. Die für das Auslösen also lediglich erforderliche einfache Druckbetätigung kann ohne irgendwelche konstruktiven Schwierigkeiten nach Wunsch von der einen oder der anderen Seite der Laufschiene her erfolgen. Die erfindungsgemässe Verriegelungsvorrichtung eignet sich daher gleichermassen gut für linksseitige oder rechtsseitige Betätigung und/ oder für einen linksseitig oder rechtsseitig im Fahrzeug einzubauenden Sitz.

Bei einem Ausführungsbeispiel sind die Auflager, an die die Scharnierplatten für das Schwenken derselben aus der Spreizstellung andrückbar sind, durch die unteren Ränder von Fenstern gebildet, die in der als U-Profilschiene ausgebildeten Laufschiene beidseits ausgespart sind, um den seitlichen Austritt der Plattenenden aus dem Innenraum des U-Profils zu ermöglichen. Hierdurch erhält man nicht nur eine konstruktiv besonders einfache Lösung für die Gestaltung der Auflager. Von grossem Vorteil ist vor allem, dass die beiden Platten des Scharniers mit der Laufschiene in deren Längsrichtung formschlüssig verbunden sind und daher die Lagerelemente für die Scharnierachse auch bei belasteter Verriegelung belastungsfrei bleiben.

Alternativ können die Auflager durch entsprechende Gestaltung der Führungsschiene gebildet sein, beispielsweise durch neben den Rastenreihen verlaufende Randflächen der Führungsschiene, die der Scharnierachse näher gelegen sind als die jeweils zugeordnete Rastenreihe.

Die Erfindung wird nachfolgend anhand von in der Zeichnung dargestellten Ausführungsbeispielen im einzelnen erläutert.

Es zeigen:

Fig. 1 einen Querschnitt eines Ausführungsbeispiels der Verriegelungsvorrichtung;

Fig. 2 einen längs der in Fig. 1 mit II-II bezeichneten Linie geführten, abgebrochen gezeichneten Schnitt des Ausführungsbeispiels;

Fig. 3 einen teils abgebrochen gezeichneten Querschnitt eines zweiten Ausführungsbeispiels der Verriegelungsvorrichtung, und

Fig. 4 einen längs der Linie IV-IV von Fig. 3 geführten und abgebrochen gezeichneten Schnitt des Ausführungsbeispiels von Fig. 3.

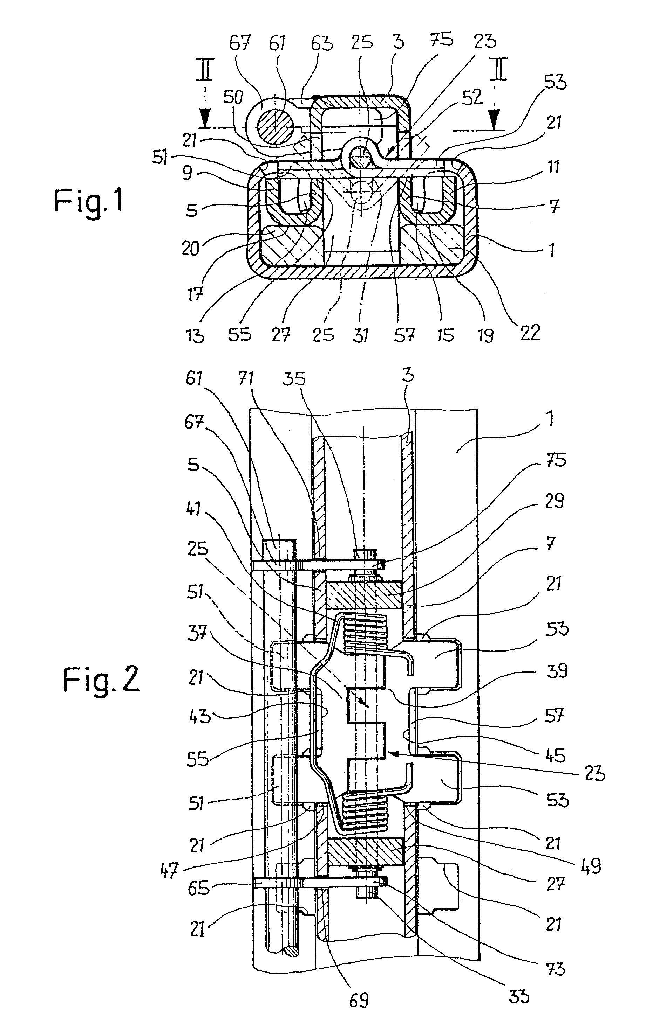

Eine mit dem Boden des betreffenden Fahrzeugs zu verbindende Führungsschiene 1 weist einen im wesentlichen C-förmigen Querschnitt auf, siehe Fig. 1. Eine mit dem Fahrzeugsitz zu verbindende Laufschiene 3 ist, wie ebenfalls aus Fig. 1 deutlich zu ersehen ist, in der Form einer nach abwärts geöffneten U-Profilschiene ausgebildet. Beide Schenkel 5 und 7 des nach abwärts geöffneten U-Profils der Laufschiene 3 erstrecken sich in die Öffnung des C-Profils der Führungsschiene 1. Mit ihren nach seitwärts und oben abgebogenen Enden 9 und 11 umgreifen die Schenkel 5 bzw. 7 nach abwärts vorspringende Profilränder 13 bzw. 15 der Führungsschiene 1 und bilden horizontale Auflageflächen 17 bzw. 19, siehe Fig. 1, die im Innenraum des C-Profils der Führungsschiene 1 auf Gleitkörpern 20 bzw. 22 aufliegen und bei gelöster Verriegelungsvorrichtung auf diesen Gleitkörpern verschiebbar sind.

Neben beiden nach abwärts abgebogenen Rändern 13 und 15 ist die Führungsschiene 1 auf ihrer Oberseite mit je einer Rastenreihe versehen, die jede eine Mehrzahl von in gleichen gegenseitigen Abständen angeordneten Rasten 21 in Form von in die Oberseite der Führungsschiene 1 eingearbeiteten Ausnehmungen besitzt, die, wie Fig. 2 zeigt, so angeordnet sind, dass die Rasten 21 der einen Rastenreihe mit je einer Raste 21 der gegenüberliegenden Rastenreihe fluchten. Für die Zusammenwirkung mit den Rasten 21 beider Rastenreihen ist ein als Sperrglied der Verriegelungsvorrichtung dienendes Scharnier 23 vorgesehen, das mit in Längsrichtung der Laufschiene 3 verlaufender Scharnierachse 25 im Innenraum des U-Profils der Laufschiene 3 gelagert ist, und zwar in zwei mit den Schenkeln 5 und 7 der Laufschiene 3 verbundenen Lagerböcken 27 und 29, die mit in vertikaler Richtung verlängerten Langlöchern 31 (siehe Fig. 1) versehen sind, durch die sich die Scharnierachse 25 mit ihren Enden 33 und 35 hindurch erstreckt. Beide der gleich ausgebildeten, auf der Scharnierachse 25 schwenkbar gelagerten Platten 37 und 39 des Scharniers 23 sind durch eine Drehfeder 41, die im Bereich zwischen den Lagerböcken 27, 29 und den Platten 37, 39 auf die Scharnierachse 25 gewickelt sind, in die Spreizstellung vorgespannt, wie sie in Fig. 1 mit durchgezogenen Linien eingezeichnet ist, wobei das Scharnier 23 voll geöffnet ist, so dass seine Platten 37 und 39 in einer gemeinsamen Ebene liegen. Dabei erstrecken sich die Platten 37 und 39 mit ihren Plattenenden 43 bzw. 45 durch in den Schenkeln 5 und 7 der Laufschiene 3 ausgesparte Fenster 47 bzw. 49 hindurch, die durch vertikal verlaufende Randflächen 50 bzw. 52 seitlich begrenzt sind. Über die Randflächen 50, 52 sind die Plattenenden 43 bzw. 45 in Längsrichtung der Laufschiene 3 formschlüssig mit dieser verbunden. Verlängerte Fortsätze 51 und 53 an den Plattenenden 43 bzw. 45, die in einem dem Abstand zweier benachbarter Rasten 21 entsprechenden gegenseitigen Abstand voneinander angeordnet sind und von denen die Fortsätze 51 der Platte 37 mit den Fortsätzen 53 der anderen Platte 39 fluchten, erstrecken sich bei in der Spreizstellung befindlichen Platten in die entsprechenden Rasten 21 beider Rastenreihen der Führungsschiene 1 hinein. Ausserdem liegen die Platten 37 und 39 mit ihren Bereichen, die der Scharnierachse 25 näher gelegen sind als die Fortsätze 51 bzw. 53 an Auflagern an, die beim gezeigten Ausführungsbeispiel durch die unteren Ränder 55 und 57 der in den Schenkeln 5 bzw. 7 ausgesparten Fenster 47 und 49 gebildet sind.

Zum Ausheben der Fortsätze 51 und 53 aus den Rasten 21, d. h. zum Überführen der Verriegelungsvorrichtung aus der Sperrstellung in die Freigabestellung, wird die Scharnierachse 25 in den Langlöchern 31 der Lagerböcke 27 und 29 nach abwärts verschoben. Diese Verschiebung erfolgt gegen die Federkraft der Drehfeder 41, die das Scharnier in der in Fig. 2 und in Fig. 1 mit ausgezogenen Linien eingezeichneten Spreizstellung zu halten sucht. Beim Abwärtsbewegen der Scharnierachse 25 werden die Platten 37 und 39 des Scharniers 23 durch Anlage an die als Auflager wirkenden Ränder 55 und 57 gegen die Kraft der Drehfeder 41 gegeneinander geschwenkt, so dass die Platten die in Fig. 1 mit strichpunktierter Linie angedeutete Stellung einnehmen, in der die Fortsätze 51 und 53 aus den Rasten 21 ausgehoben sind.

Zum Erzeugen der Verschiebebewegung der Scharnierachse 25 weist das in Fig. 1 und 2 gezeigte Ausführungsbeispiel eine Betätigungswelle 61 auf, die in seitlich an die Laufschiene 3 angeschweissten Laschen, von denen lediglich in Fig. 1 eine Lasche 63 zu sehen ist, drehbar gelagert ist. Auf der Betätigungswelle 61 sind Hebel 65 und 67 befestigt, die sich durch Durchbrüche 69 und 71 der Laufschiene 3 hindurch mit ihren freien Enden 73 bzw. 75 über die Enden 33 bzw. 35 (siehe Fig. 2) der Scharnierachse 25 erstrecken. Durch Drehen der Betätigungswelle 61 drücken die nach abwärts schwenkenden Hebel 65 und 67 mit ihren Enden 73 bzw. 75 die Scharnierachse 25 nach unten. Beim Rückbewegen der Hebel 65 und 67 bewegt sich die Scharnierachse 25 unter dem Einfluss der Kraft der Drehfeder 41 wieder nach oben, so dass das Scharnier 23 wieder die Spreizstellung einnimmt. Die Bewegung der Betätigungswelle 61 kann beispielsweise mittels eines Hebels und eines Bowdenzuges auf die Betätigungswelle einer zweiten Verriegelungsvorrichtung übertragen werden, die einem zweiten Schienenpaar zugeordnet ist.

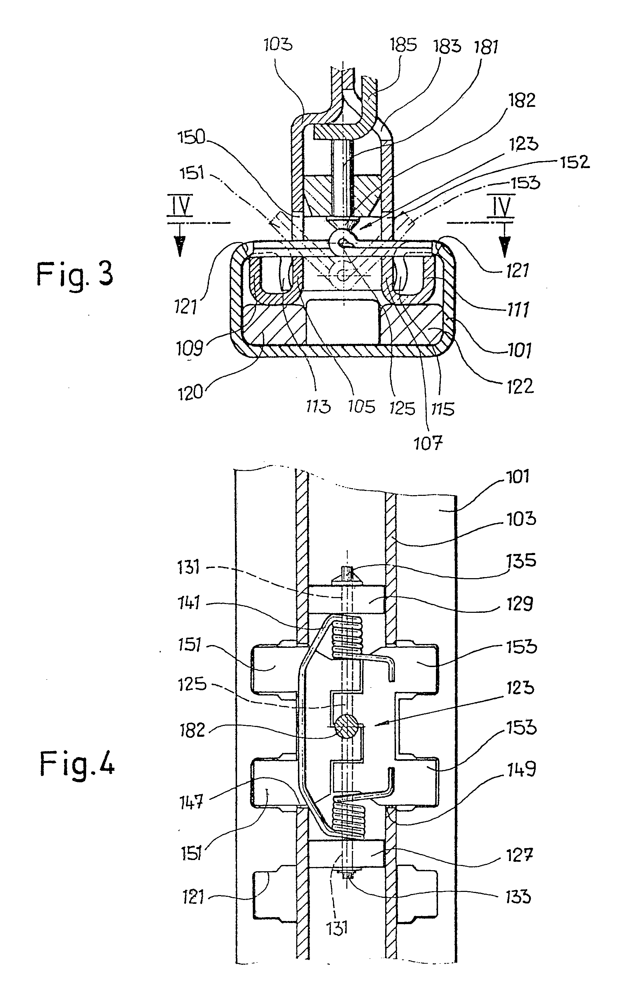

Das in Fig. 3 und 4 gezeigte zweite Ausführungsbeispiel unterscheidet sich vom zuvor erläuterten Beispiel nur durch die Ausbildung des Betätigungsglieds für das Auslösen der Verriegelungsvorrichtung und durch eine etwas grössere Höhe der Laufschiene. Teile, die solchen des Beispiels der Fig. 1 und 2 in Funktion und Ausbildung entsprechen, sind in den Fig. 3 und 4 mit demgegenüber um einhundert vergrösserten Bezugszahlen bezeichnet.

Anstelle von auf die Enden 33 und 35 der Scharnierachse 25 drückenden Betätigungshebeln 65 und 67 ist bei dem Beispiel gemäss Fig. 3 und 4 ein im Innenraum des U-Profils der Laufschiene 103 vertikal verschiebbar gelagerter Betätigungsdorn 181 vorgesehen, der mit seinem unteren Ende 182 auf den zentralen Bereich des Scharniers 123 ausgerichtet ist, siehe Fig. 4. Der Betätigungsdorn 181 ist mittels einer durch eine Aussparung 183 hindurch in den Innenraum der Laufschiene 103 eingreifenden Betätigungseinrichtung 185 nach abwärts bewegbar, so dass die Scharnierachse 125 in den Langlöchern 131 der Lagerböcke 127 und 129 nach abwärts verschoben wird, um die Verriegelungsvorrichtung in gleicher Weise aus der Sperrstellung in die Freigabestellung überzuführen, wie dies beim zuvor beschriebenen Beispiel gemäss Fig. 1 und 2 erläutert worden ist.

## Patentansprüche

1. Verriegelungsvorrichtung für die Längsverstelleinrichtung eines Fahrzeugsitzes, mit mindestens einer Laufschiene (3; 103), die sich in Richtung der Längsverstellung des Sitzes erstreckt, mit diesem verbunden und an einer am Fahrzeug befestigten Führungsschiene (1; 101) längsverschiebbar geführt ist, und mit einem Sperrglied (23; 123), das an der Laufschiene für eine quer zur Längsrichtung derselben verlaufende Bewegung gelagert und mittels eines Betätigungsglieds (65, 67; 182) zwischen einer Sperrstellung, in der das Sperrglied mit mindestens einer von an der Führungsschiene vorgesehenen Rasten (21; 121) verrastet ist, und einer Freigabestellung bewegbar ist, in der das Sperrglied aus der Verrastung ausgehoben ist, gekennzeichnet durch die Merkmale:

a) dass die Rasten (21; 121) an der Führungsschiene (1; 101) in zwei im Abstand voneinander längsverlaufenden Rastenreihen angeordnet sind, zwischen denen der das Sperrglied tragende Teil der Laufschiene (3; 103) geführt ist,

b) dass als Sperrglied ein mit längsverlaufender Scharnierachse (25; 125) angeordnetes Scharnier (23; 123) vorgesehen ist, dessen um die Scharnierachse schwenkbare Platten (37, 39; 137, 139) durch Federkraft in die der vollen Scharnieröffnung und der Sperrstellung entsprechende Spreizstellung vorgespannt sind, in der die Enden (43, 45; 143, 145) beider Platten in Rasten (21; 121) beider Rastenreihen eingreifen und die der Scharnierachse (25; 125) näher gelegenen, an die Enden (43, 45; 143, 145) angrenzenden Bereiche der Platten (37, 39; 137, 139) an Auflagern anliegen, und

c) dass für das Überführen in die Freigabestellung die Scharnierachse (25; 125) senkrecht zur Ebene der gespreizten Platten (37, 39; 137, 139) mittels des Betätigungsglieds (65, 67; 182) verschiebbar ist, so dass durch Andrücken derselben an die Auflager die gespreizten Platten (37, 39; 137, 139) gegeneinander geschwenkt und dadurch die Plattenenden (43, 45; 143, 145) aus der Verrastung mit den Rasten (21; 121) ausgehoben werden.

2. Vorrichtung nach Anspruch 1, dadurch gekennzeichnet, dass die Laufschiene (3; 103) im wesentlichen in Form einer U-Profilschiene ausgebildet ist, in deren Innenraum Lagerböcke (27, 29; 127, 129) befestigt sind, in denen die Enden (33, 35; 133, 135) der Scharnierachse (25; 125) in Langlöchern (31; 131) verschiebbar gelagert sind, und dass als Auflager für die Platten (37, 39; 137, 139) die unteren Ränder (55, 57; 155, 157) von in der Laufschiene (3; 103) beidseits für den seitlichen Austritt der Plattenenden (43, 45; 143, 145) ausgesparten Fenstern (47, 49; 147, 149) vorgesehen sind, deren seitliche Randflächen (50, 52; 150, 152) die Platten (37, 39; 137, 139) in Längsrichtung formschlüssig mit der Laufschiene (3; 103) verbinden.

3. Vorrichtung nach Anspruch 1 oder 2, gekennzeichnet durch eine auf der Scharnierachse (25; 125) angeordnete Drehfederanordnung (41; 141) zum Erzeugen der die Platten (37, 39; 137, 139) in die Spreizstellung vorspannenden Kraft.

4. Vorrichtung nach einem der Ansprüche 1 bis 3, dadurch gekennzeichnet, dass beide Platten (37, 39; 137, 139) des Scharniers (23; 123) gleich ausgebildet sind und an ihren Plattenenden (43, 45; 143, 145) wenigstens je zwei verlängerte Fortsätze (51, 53; 151, 153) aufweisen, die mit den Fortsätzen der jeweils anderen Platte fluchten und als Riegelkörper für den gleichzeitigen Eingriff in eine entsprechende Anzahl von Rasten (21; 121) jeder Rastenreihe dienen.

5. Vorrichtung nach Anspruch 2 und einem der übrigen Ansprüche 1 bis 4, dadurch gekennzeichnet, dass das Betätigungsglied eine an der Laufschiene (3) seitlich drehbar gelagerte, längsverlaufende Betätigungswelle (61) aufweist, mit der zwei Betätigungshebel (65 und 67) mit ihrem einen Ende auf Drehung verbunden sind, die sich durch zugeordnete Durchbrüche (69, 71) der Laufschiene (3) hindurch in deren Innenraum erstrecken und mit ihren Endbereichen (73 bzw. 75) je eines der über die Lagerböcke (27 und 29) überstehenden Enden (33 bzw. 35) der Scharnierachse (25; 125) übergreifen.

6. Vorrichtung nach Anspruch 2 und einem der übrigen Ansprüche 1 bis 4, dadurch gekennzeichnet, dass das Betätigungsglied einen im Innenraum der Laufschiene (103) für eine vertikale Verschiebebewegung geführten Betätigungsdorn (181) aufweist, mit dessen unterem Ende (182) der Zentralbereich des Scharniers (123) beaufschlagbar ist.

## Claims

1. Locking device for the longitudinal adjustment means of a vehicle seat, having at least one rail (3; 103) extending in the direction of longitudinal adjustment of the seat, being connected thereto and guided for longitudinal adjustment on a guide rail (1; 101) fixed to the vehicle, and comprising a locking member (23; 123) mounted on the rail for movement crosswise to the longitudinal direction thereof and capable of being moved by means of an actuating member (65, 67; 182) between a locked position in which the locking member is engaged with at least one of the detents (21; 121) provided on the guide rail, and a release position in which the locking member is lifted out of engagement with the detent, characterised by the features—

(a) that the detents (21; 121) on the guide rail (1; 101) are disposed in two rows extending longitudinally and at a distance from each other, between which is guided the part of the rail (3; 103) which carries the locking member,

(b) that provided as a locking member is a hinge (23; 123) disposed with a longitudinally extending hinge pin (25; 125) and of which the plates (37, 39; 137, 139) which are pivotable about the hinge pin are pre-tensioned by spring force into the opened-out position corresponding to full opening of the hinge and the locking position, and in which the ends (43, 45; 143, 145) of both plates engage in detents (21; 121) in both rows of detents while those which are situated more closely to the hinge pin (25; 125) and adjacent to the ends (43, 45; 143, 145) of the plates (37, 39; 137, 139) rest on support means, and

(*c*) that for movement into the release position, the hinge pin (25; 125) is displaceable at a right angle to the plane of the opened-out plates (37, 39; 137, 139) by means of the actuating member (65, 67; 182), so that by pressing the plates against the support means, the opened-out plates (37, 39; 137, 139) are pivoted towards each other so that the plate ends (43, 45; 143, 145) are lifted out of engagement with the detents (21; 121).

2. Device according to Claim 1, characterised in that the rail (3; 103) is constructed substantially in the form of a U-profile rail inside which there are fixed mounting blocks (27, 29; 127, 129) in which the ends (33, 35; 133, 135) of the hinge pin (25; 125) are mounted for displacement in elongated holes (31; 131) and in that as support means for the plates (37, 39; 137, 139), the bottom edges (55, 57; 155, 157) of ports (47, 49; 147, 149) recessed in the rail (3; 103) on either side for lateral emergence of the plate ends (43, 45; 143, 145) are provided, the lateral marginal faces (50, 52; 150, 152) of said ports connect the plates (37, 39; 137, 139) to the rail (3; 103) in form-locking fashion in the longitudinal direction.

3. A device according to Claim 1 or 2, characterised by a rotary spring arrangement (41; 141) disposed on the hinge pin (25; 125) for generating the force for pre-tensioning the plates (37, 39; 137, 139) into the opened-out position.

4. A device according to one of Claims 1 to 3, characterised in that both plates (37, 39; 137, 139) of the hinge (23; 123) are identical in construction and have at their plate ends (43, 45; 143, 145) at least two extended projecting portions (51, 53; 151, 153) which are aligned with the projection portions of whichever is the other plate and serve as locking members for simultaneous engagement into a corresponding number of detents (21; 121) in each row of detents.

5. A device according to Claim 2 and one of the other Claims 1 to 4, characterised in that the actuating member has, mounted laterally on the rail (3) for rotation and extending in longitudinal direction of the rail (3), an actuating shaft (61) with which two actuating levers (65 and 67) have one end connected in nonrotatable manner and extend through associated apertures (69, 71) in the rail (3) and into the interior of the latter, their end portions (73, 75) engaging respectively over one of those ends (33, 35) of the hinge pin (25; 125) which project beyond the bearing blocks (27 and 29).

6. A device according to Claim 2 and one of the other Claims 1 to 4, characterised in that the actuating member has, guided for vertical displacement in the interior of the rail (103), an actuating rod (181), the bottom end (182) of which being adapted to bear on the central area of the hinge (123).

**Revendications**

1. Mécanisme de verrouillage pour le dispositif de déplacement longitudinal d'un siège de véhicule, avec au moins une glissière (3; 103) s'étendant dans le sens de déplacement longitudinal du siège, fixée à ce dernier et se déplaçant le long d'une barre de guidage (1; 101) fixée au véhicule, et avec un élément de blocage (23; 123) monté sur la glissière pour se déplacer en direction transversale à cette dernière et pouvant, grâce à un élément de commande (65, 67; 182), se déplacer entre une position de blocage où l'élément de blocage s'enclenche dans au moins un des crans (21; 121) prévus à cet effet sur la barre de guidage, et une position de déverrouillage où l'élément de blocage est relevé de son enclenchement, caractérisé par le fait:

a) que les crans (21; 121) sur la barre de guidage (1; 101) sont disposés en deux rangées longitudinales distantes, entre lesquelles est guidée la partie de la glissière (3; 103) qui supporte l'élément de blocage,

b) qu'une charnière (23; 123) ayant un axe longitudinal (25; 125) est prévue en tant qu'élément de blocage, dont les plaques (37, 39; 137, 139) pouvant pivoter autour de l'axe de la charnière sont précontraintes par ressort en position d'écartement qui correspond à l'ouverture complète de la charnière et à la position de blocage, dans laquelle les extrémités (43, 45; 143, 145) des deux plaques pénètrent dans les crans (21; 121) des deux rangées de crans, tandis que les zones des plaques (37, 39; 137, 139) voisines des extrémités (43, 45; 143, 145) et qui sont les plus proches de l'axe (25; 125) de la charnière sont logées sur des appuis, et

c) que, pour la remise en position de déblocage, l'axe (25; 125) de la charnière peut être déplacé perpendiculairement au plan des plaques (37, 39; 137, 139) écartées, cela à l'aide de l'élément de commande (65, 67; 182), de sorte que, par la pression exercée par les plaques écartées sur les appuis, les plaques écartées (37, 39; 137, 139) pivotent l'une par rapport à l'autre, ce mouvement permettant de décrocher leurs extrémités (43, 45; 143, 145) du blocage dans les crans (21; 121).

2. Mécanisme selon la revendication 1, caractérisé par le fait que la glissière (3; 103) a pour l'essentiel la forme d'un profilé en U à l'intérieur duquel sont fixés des paliers (27, 29; 127, 129), dans lesquels sont logées les extrémités (33, 35; 133, 135) de l'axe (25; 125) de la charnière qui peuvent se mouvoir dans des trous oblongs (31; 131), et que les bords inférieurs (55, 57; 155, 157) d'ouvertures (47, 49; 147, 149) pratiquées de chaque côté de la glissière (3; 103) pour permettre la sortie latérale des extrémités (43, 45; 143, 145) des plaques sont prévus pour servir d'appuis aux plaques (37, 39; 137, 139), les faces latérales (50, 52; 150, 152) de ces ouvertures servant à relier les plaques (37, 39; 137, 139) par complémentarité de forme à la glissière (3; 103) dans le sens longitudinal de celle-ci.

3. Mécanisme selon l'une des revendications 1 ou 2, caractérisé par le fait qu'un ressort de torsion (41; 141) prévu pour fournir la force nécessaire à la précontrainte des plaques (37, 39; 137, 139) en position d'écartement est logé dans l'axe (25 ; 125) de la charnière.

4. Mécanisme selon l'une quelconque des revendications 1 à 3, caractérisé par le fait que les deux plaques (37, 39 ; 137, 139) de la charnière (23 ; 123) ont la même forme et présentent chacune sur leurs extrémités (43, 45 ; 143, 145) au moins deux prolongements (51, 53 ; 151, 153), alignés avec les prolongements de l'autre plaque, et servant d'éléments de verrouillage en pénétrant en même temps dans un nombre correspondant de crans (21 ; 121) de chaque rangée de crans.

5. Mécanisme selon la revendication 2 et l'une quelconque des revendications 1 à 4, caractérisé par le fait que l'élément de commande comporte un arbre de commande (61) s'étendant longitudinalement et monté latéralement en rotation sur la glissière (3), avec lequel sont reliés en rotation par l'une de leurs extrémités deux leviers de commande (65 et 67) qui, à travers des passages correspondants (69, 71) de la glissière (3), s'étendent à l'intérieur de cette dernière et arrivent avec leurs autres extrémités respectives (73 ou 75) jusqu'à une des extrémités (33 ou 35) de l'axe (25 ; 125) de la charnière, ces dernières extrémités dépassant au-dessus des paliers (27 et 29).

6. Mécanisme selon la revendication 2 et l'une quelconque des revendications 1 à 4, caractérisé par le fait que l'élément de commande comporte une broche de commande (108) guidée pour se déplacer verticalement à l'intérieur de la glissière (103), et dont l'extrémité inférieure (182) est dirigée vers la zone centrale de la charnière (123).

0 094 438

Fig.1

Fig.2

7

Fig. 3

Fig.4